# EUROPEAN PATENT APPLICATION

(11) **EP 4 258 092 A2**
(43) Date of publication of application: **11.10.2023**
(21) Application number: 23169836.6
(22) Date of filing: 26.07.2016
(51) Int. Cl.: G06F 3/048

(54) **INTERACTIVE GEO-CONTEXTUAL NAVIGATION TOOL**

(62) Divisional of application: 16757104.1
(71) Applicant: Google LLC, Mountain View, CA 94043 (US)
(72) Inventor: FANG, Jingyi, Mountain View, 94043 (US); ASKAY, Sean, Mountain View, 94043 (US)
(74) Representative: Finlayson, Scott Henry

(57) **Abstract**

Systems, apparatuses, and methods for providing an interactive, geo-contextual interface are provided. In one embodiment, a method can include providing a user interface for display on a display device. The user interface can include a display area for presenting visual content, the visual content representing an original location on a three-dimensional body. The method can include providing an interactive widget for display on the display device. The widget can be represented as three-dimensional and having an appearance corresponding to the three-dimensional body. The method can include receiving data indicative of a user input directed to at least one of the user interface display area and the widget. The method can include adjusting at least one of the visual content, the widget, and the visual indicator based at least in part on the data indicative of the user input.

## Description

### FIELD

The present disclosure relates generally to an interactive, three-dimensionally rendered interface, and more particularly to an interactive, interface that provides navigability of visual content, as well as geo-context for such visual content.

### BACKGROUND

Improvements in computer processing power and content delivery have led to the development of interactive 3D imagery, such as 3D map imagery. Map services are capable of displaying 3D images of a geographic location from a near top-down perspective, an angled or oblique perspective, or from a street level or ground-based perspective at a particular geographic location. These services typically provide a user interface that allows a user to navigate through the map imagery. For instance, a typical user interface may allow a user to pan, tilt, rotate, and zoom the imagery at a geographic point of interest. Certain navigation, however, may require a large amount of user input to arrive at a desired location and/or may cause the user to lose context as to what portions are being displayed for the user.

### SUMMARY

Aspects and advantages of embodiments of the present disclosure will be set forth in part in the following description, or may be learned from the description, or may be learned through practice of the embodiments.

One example aspect of the present disclosure is directed to a computer-implemented method of providing an interactive, geo-contextual interface. The method includes providing, by one or more computing devices, a user interface for display on a display device. The user interface includes a display area for presenting visual content and the visual content represents an original location on a three-dimensional body. The method further includes providing, by the one or more computing devices, an interactive widget for display on the display device. The widget is represented as three-dimensional and has an appearance corresponding to the three-dimensional body. The widget includes a visual indicator configured to indicate on the widget the original location represented by the visual content displayed in the display area. The method includes receiving, by the one or more computing devices, data indicative of a user input directed to at least one of the user interface display area and the widget. The method further includes adjusting, by the one or more computing devices, at least one of the visual content, the widget, and the visual indicator based at least in part on the data indicative of the user input.

Another example aspect of the present disclosure is directed to a system for providing an interactive, geo-contextual interface. The system includes one or more processors and one or more memory devices. The one or more memory devices store instructions that when executed by the one or more processors cause the one or more processors to perform operations. The operations include providing a user interface for display on a display device. The user interface includes a display area for presenting visual content. The visual content represents an original location on a three-dimensional body. The operations further include providing an interactive widget for display on the display device. The widget is represented as three-dimensional and has an appearance corresponding to the three-dimensional body. The widget includes a visual indicator configured to provide geo-context associated with the visual content displayed in the display area. The operations include receiving data indicative of a user input directed to at least one of the display area and the widget. The operations further include adjusting at least one of the visual content, the widget, and the visual indicator based at least in part on the data indicative of the user input.

Yet another example aspect of the present disclosure is directed to a user device. The user device includes a display device, one or more processors, and one or more memory devices. The one or more memory devices store instructions that when executed by the one or more processors cause the one or more processors to perform operations. The operations include presenting a user interface for display on the display device. The user interface includes a display area for presenting visual content. The visual content represents an original location on a three-dimensional body. The operations include presenting an interactive widget for display on the display device. The widget is represented as three-dimensional and has an appearance corresponding to the three-dimensional body. The widget includes an adjustable visual indicator configured to provide geo-context associated with the visual content displayed in the display area. The operations include receiving data indicative of a user input directed to at least one of the display area and the widget. The operations include adjusting at least one of the visual content, the widget, and the visual indicator based at least in part on the data indicative of the user input.

Yet another example aspect of the present disclosure is directed to a method. The method includes causing display of a user interface display area in which is displayed visual content representing an original location or region on a three-dimensional body. The method includes causing display of an interactive, three-dimensional widget having a shape corresponding to that of the three-dimensional body. The method includes responding to receipt of an interaction with respect to the interactive, three-dimensional widget by adapting the visual content displayed in the user interface display area based on the received interaction.

Other example aspects of the present disclosure are directed to systems, apparatuses, tangible, non-transitory computer-readable media, user interfaces, memory devices, and electronic devices for providing user interfaces and interactive widgets.

These and other features, aspects and advantages of various embodiments will become better understood with reference to the following description and appended claims. The accompanying drawings, which are incorporated in and constitute a part of this specification, illustrate embodiments of the present disclosure and, together with the description, serve to explain the related principles.

### BRIEF DESCRIPTION OF THE DRAWINGS

Detailed discussion of embodiments directed to one of ordinary skill in the art are set forth in the specification, which makes reference to the appended figures, in which:
FIG. 1 depicts an example system according to example embodiments of the present disclosure;
FIG. 2A depicts a user interface that includes an example interactive widget with a visual indicator according to example embodiments of the present disclosure;
FIG. 2B depicts a user interface that includes an example widget with a visual indicator according to example embodiments of the present disclosure;
FIG. 3 depicts a user interface that includes an example widget with a visual indicator in a second form according to example embodiments of the present disclosure;
FIG. 4 depicts a user interface according to example embodiments of the present disclosure;
FIG. 5A-B illustrates a user interaction with a user interface according to example embodiments of the present disclosure;
FIG. 6A-F illustrates a user interaction with an example widget according to example embodiments of the present disclosure;
FIG. 7 depicts a user interface that includes an example widget with user-selectable options according to example embodiments of the present disclosure;
FIG. 8 depicts a flow diagram of an example method according to example embodiments of the present disclosure;
FIG. 9 depicts a flow diagram of an example method according to example embodiments of the present disclosure; and
FIG. 10 depicts an example system according to example embodiments of the present disclosure.

### DETAILED DESCRIPTION

Reference now will be made in detail to embodiments, one or more example(s) of which are illustrated in the drawings. Each example is provided by way of explanation of the embodiments, not limitation of the present disclosure. In fact, it will be apparent to those skilled in the art that various modifications and variations can be made to the embodiments without departing from the scope or spirit of the present disclosure. For instance, features illustrated or described as part of one embodiment can be used with another embodiment to yield a still further embodiment. Thus, it is intended that aspects of the present disclosure cover such modifications and variations.

Example aspects of the present disclosure are directed to an interactive, three-dimensional widget that provides navigability of visual content, as well as geo-context for such visual content. As used herein, a widget refers to an element of a graphical user interface. The widget can be an element of interaction in the user interface. For instance, a display device can display a user interface that includes a display area. The display area can present visual content representing a geographical location on a three-dimensional body (e.g., an area, region, etc. of the Earth). The user interface can also include a smaller, interactive widget that has an appearance corresponding to that of the three-dimensional body. For example, the interactive widget can be an interactive, three-dimensional rendering of a "mini globe" that corresponds to the appearance of the Earth. The widget can include a visual indicator (e.g., a polygon) that indicates the location being shown by the visual content in the display area of the user interface. As a user navigates the visual content to view new locations on the three-dimensional body, the visual indicator and/or the widget can automatically adjust such that it is consistent with the location presented by the visual content. This can help provide the user with geo-context as to what portion of, for example, the Earth the user is viewing. Moreover, the user can interact with the widget to change the location imagery presented in the user interface. In this way, the user can more easily navigate the visual content while maintaining his or her geo-contextual understanding of the location being viewed.

More particularly, a user device can provide a user interface for display on a display device. The user interface can include a display area for presenting visual content. The visual content can represent a location on a three-dimensional body. For example, the visual content can depict a geographic area of interest of the Earth. The display area can also include an interactive widget (hereinafter, the "widget"). The widget can have an appearance corresponding to the three-dimensional body. For instance, in the event that the three-dimensional body is the Earth, the widget can be circular (e.g., to represent the spherical Earth) and have graphics that depict similar land/water boundaries (e.g., a "mini globe"). The widget can be oriented such that the portion of the widget corresponding to the location represented in the displayed visual content is visible. By way of example, in the event that the visual content in the display area is showing a region that mostly includes the country of Japan, the widget (e.g., "mini globe") can be oriented such that its portion that corresponds to Japan is visible to a user.

To help provide geo-context for a user, the widget can include a visual indicator. The visual indicator can indicate, on the widget, the location represented by the visual content. For example, the visual indicator can include a polygon having a shape that delineates the portion of the widget that corresponds to the visual content displayed in the display area. For example, in the event that the visual content in the display area is showing a region of the Earth's surface (e.g., including Japan), the widget can include a quadrilateral that indicates the portion of the widget corresponding to that region of the Earth. Additionally, and/or alternatively, the visual indicator can indicate an orientation associated with the visual content relative to the widget. For instance, a portion of the visual indicator (e.g., a droplet portion) can identify a heading as the user rotates the visual content of the display area.

The visual indicator can change based, at least in part, on user interaction with the visual content. For instance, the visual content can be viewed via an adjustable zoom level (e.g., a virtual distance between a virtual camera and the three-dimensional body). The visual indicator can change in orientation, size, shape, form, etc. based, at least in part, on the zoom level. For example, as the user zooms out, away from the surface of the Earth depicted in the visual content (e.g., increasing the virtual distance) the visual indicator can increase in size, indicating that a larger area of the Earth is being presented in the display area. Above a certain upper zoom threshold (e.g., when the virtual camera appears to be a certain distance into outer space), the visual indicator can disappear from the widget. Additionally, and/or alternatively, as the user zooms in, towards the surface of the Earth depicted in the visual content (e.g., decreasing the virtual distance), the visual indicator can decrease in size, indicating that a smaller area of the Earth is being presented in the display area. In some implementations, below a certain lower zoom threshold, the visual indicator can change shape from a first format (e.g., the polygonal shape) to a second format (e.g., a cross-hair shape) indicating the location presented by the visual content. This can convey more refined geo-contextual information (e.g., using a precision identifier) to the user when navigating within a highly zoomed view. As further described herein, in some implementations, the widget itself can disappear based, at least in part, on one or more zoom level(s).

The widget (and/or the visual indicator) can adjust based on user input directed to the visual content. For instance, a user can interact with (e.g., click, drag, rotate) the visual content to select a new location for viewing in the display area. Accordingly, the visual content can be adjusted such that it corresponds to the new location. Additionally, the widget can be adjusted such that a portion of the widget which corresponds to the new location is visible to the user. By way of example, if the user clicks a new location on the visual content that corresponds to South Korea, the visual content can be adjusted such that it corresponds to a view of South Korea. Moreover, the widget (e.g., "mini globe") can be adjusted such that the portion of the widget that corresponds to South Korea can be presented by the display device. Additionally, and/or alternatively, the visual indicator can be adjusted such that it now indicates South Korea is being presented in the display area.

The user can also adjust the visual content via interaction with the widget. For instance, a user can click-and-drag the widget such that it rotates, making other portions of the widget visible to the user. As the user drags the widget, a second visual indicator (e.g., an arrow) extending from the original location to a new location can be provided on the widget. Upon release of the drag user input, the visual content can include an animation. For example, the animation can depict a "fly-over" navigation animation from the original location (e.g., Japan) to a new location (e.g., South Korea).

The methods and apparatuses described herein may provide a number of technical benefits. For instance, the provision of an interactive, three-dimensional widget via which visual content displayed in a user interface display area can be adapted may provide an efficient and intuitive means for navigating around a representation of a three-dimensional body such as, but not limited to, the Earth. This may reduce the number of user inputs required by the user to navigate around the three-dimensional body and so may reduce the amount of processing associated with handling the user inputs. Additionally, as a result of the reduced number the inputs and the intuitive nature the navigation, the user may be able to spend less time using the application which may reduce screen-on time, thereby reducing power usage.

The three-dimensional nature of the widget, which has a shape corresponding to the shape of the three-dimensional body, may enable the user to more easily understand the relationship between a displayed region or location on the three-dimensional body and the three-dimensional body as a whole. In a geo-navigation implementation, the provision of the interactive, three-dimensional widget may be said to increase awareness of the global geo-context of the visual content currently being displayed in the display area. Whether or not it is applied to geo-navigation, the provision of the interactive, three-dimensional widget may facilitate navigation around the three-dimensional body because the user may be able to understand more easily the location on the three-dimensional body of the currently displayed visual content. As such, the user may be able to more easily determine in which direction they should navigate the visual content in order to cause a new location or region of interest to be displayed in the display area. Thus, the user may be less likely to become lost as they navigate around the three-dimensional body, thereby reducing the number of inputs that may be required when navigating from A to B. This effect may be enhanced by the provision of the visual indicator overlaying the interactive, three-dimensional widget which accurately indicates a current location or region on the three-dimensional body that is represented by the visual content displayed in the display area and/or which indicates an orientation of the visual content with respect to the body as a whole.

In addition, by allowing the user to adapt the visual content displayed in the display area based on an interaction with the widget, the user may navigate around the three-dimensional body using fewer inputs, particularly when the extent of the desired navigation is large. For instance, the user may be able to apply a single navigation interaction in respect of the interactive, three-dimensional widget in order to travel a large distance, which would otherwise require a number of inputs to be applied in respect of the displayed visual content.

In some examples, following a navigation interaction in respect of the widget, an animation may be provided which shows navigation from an original location or region to a new location or region in a particularly intuitive way which may enable the user to better understand the path of navigation between the locations or regions. In some aspects, the user may be able to provide an interaction to cause the animation to stop prior to reaching the new location. This may enable the user to navigate to an intermediate location without needing to navigate all the way to the new location and then back to the intermediate location. Again, this may reduce the number of user inputs that are required.

Certain aspects of the methods and apparatuses described herein may include causing the disappearance and reappearance of the widget as required. For instance, when an amount of the three-dimensional body which is displayed in the display area is sufficient that the user is able to make out the shape of the three-dimensional body and its current orientation without use of the widget, the widget may be caused to be removed from the display. This may free up valuable space on the display and may provide a generally uncluttered user interface. Also, in order to make best use of the display area, the widget may in some examples be selectable by a user in order to cause one or more selectable options to be displayed. This may free up space on the display, without sacrificing any functionality.

The systems, methods, and apparatuses of the present disclosure can improve user device computer technology to save computational resources, by increasing navigational efficiency and geo-contextual understanding of a map interface presented on the user device. More particularly, processing resources can be saved by decreasing the number of user inputs required for navigation and the frequency of map resets (e.g., changing the map interface to high-level image of the three-dimensional body) due to the user's lack of geo-context. Such improvement can arise by providing the interactive widget as three-dimensional and having an appearance corresponding to the three-dimensional body, as well as the inclusion of the visual indicator configured to indicate on the widget the location represented by the visual content in the display area. Moreover, the ability to receive user input directed to at least one of the user interface display area and the widget, and to adjust the visual content, the widget, and/or the visual indicator accordingly can decrease the required navigational inputs saving computation resources, as described herein. This can improve user device computer technology because it can decrease the processing resources required for running the map interface. Moreover, this may allow the user device to allocate its saved computing resources to, for example, render an interface of higher resolution.

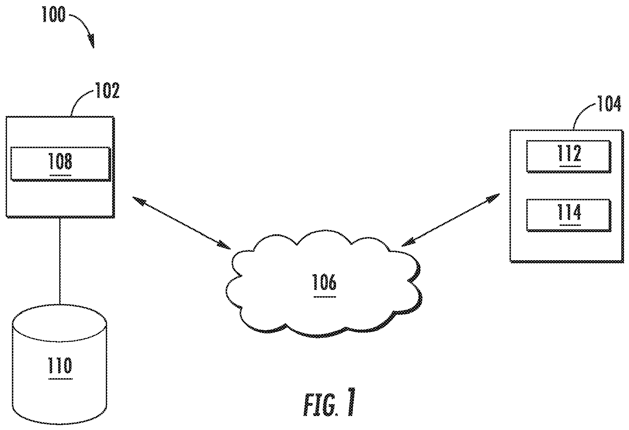

FIG. 1 depicts an example system 100 according to example embodiments of the present disclosure. The system 100 can include a provider computing system 102 and one or more user device(s) 104. The provider system 102 and the user device(s) 104 can be interconnected via a direct connection and/or can be coupled via a communications network 106, such as a LAN, WAN, the Internet, etc., which may be wired or wireless or can include any number of wired or wireless communication links.

The provider system 102 can be associated with a mapping service provider such as, Google Maps or Google Earth developed by Google Inc. (Mountain View, Calif.), or other suitable geographic service. In some implementations, the provider system 102 can be associated with the three-dimensional body to be displayed (e.g., architect, building owner, government entity). The provider system 102 can include various components for performing various operations and functions as described herein. For instance, the provider system 102 can include one or more computing device(s) 108 (e.g., servers). As will be further described herein, the computing device(s) 108 can include one or more processor(s) and one or more memory device(s). The one or more memory device(s) can store instructions that when executed by the one or more processor(s) cause the one or more processor(s) to perform operations and functions, for example, such as those described herein for providing an interactive, geo-contextual interface. The computing device(s) 108 can be coupled to and/or can include various databases, such as a map database 110. The computing device(s) 108 can provide various data from map database 110 to the user device(s) 104 via network 106.

The user device 104 can be various types of user devices, such as, a tablet, a personal digital assistant (PDA), a laptop computer, a desktop computer, a phone, a smart phone, a computerized watch (e.g., a smart watch), computerized eyewear, computerized headwear, other types of wearable computing devices, a gaming system, a media player, an e-book reader, a television platform, a navigation system, an embedded computing device, or any other type of mobile and/or non-mobile computing device. The user device 104 can include various components for performing various operations and functions as described herein. For instance, the user device 104 can include a display device 112 and one or more computing device(s) 114. The display device 112 can include an output device configured to display a user interface, such as a CRT, LCD, plasma screen, touch screen, TV, projector, etc. As will be further described herein, the computing device(s) 114 can include one or more processor(s) and one or more memory device(s). The one or more memory device(s) can store instructions that when executed by the one or more processor(s) cause the one or more processor(s) to perform operations and functions, for example, such as those described herein for presenting a user interface on the display device 112. In some implementations, as further described herein, the computing devices 108 (of the provider system 102) can provide a user interface for display on a display device 112 (e.g., of the user device 104).

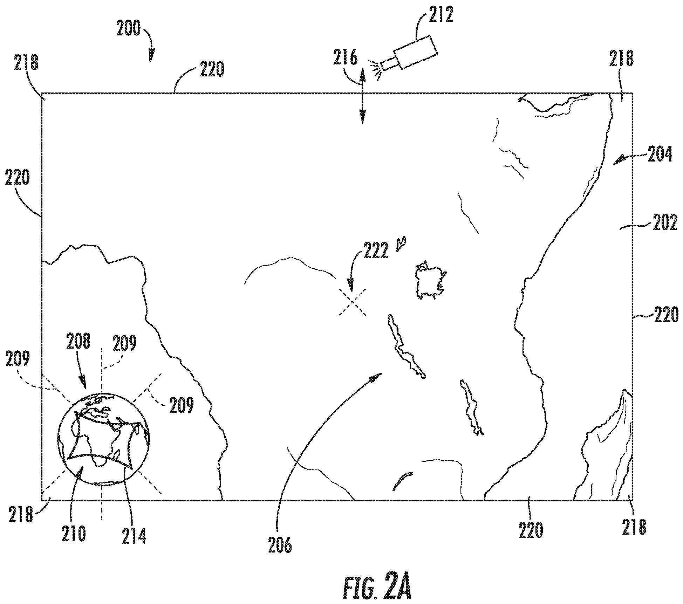

FIG. 2A depicts a user interface 200 according to example embodiments of the present disclosure. The user interface 200 can include a display area 202 for presenting visual content 204. The visual content 204 can be associated with a three-dimensional body. The three-dimensional body can be a geographic body (e.g., Earth, moon, Mars, other planet, other celestial object) and/or another body (e.g., building, structure, object, particle, anatomic part). The visual content 204 can represent a location 206 on a three-dimensional body. The location can be a place, area, position, municipality, region, etc. on the three-dimensional body. In some implementations, the location 206 can be selected by a user via user interaction with the interface 200.

The user interface 200 can be displayed on a display device using any suitable rendering techniques. For instance, the provider system 102 can obtain (e.g., from database 110) and transmit map data corresponding to the specified location to the user device 104. In some implementations, an application programming interface can request data associated with a specified location (e.g., based on location coordinates, other identifiers) from the provider system 102 and/or the database 110. In some implementations, the map data can include vector data, raster data partitioned into "tiles" of a fixed size, a combination of vector data and raster data, and/or in any other suitable format. Moreover, the map data can allow for generating a two-dimensional map or a three-dimensional map (e.g., vertices defining a mesh and textures). A software application operating on the user device 104 can render and display the user interface 200 for a specified location based, at least in part, on the map data.

As shown in FIG. 2A, an interactive widget 208 can also be provided for display. The widget 208 can be initially located anywhere in the user interface 200 based, for example, on a preset location, which can be changed by a user through a user interface element, such as a preference pane, menu, or other suitable user interface element. In some implementations, a user can select and drag the widget 208 to any location within the user interface 200. In some implementations, the widget 208 can overlay the visual content 204 (e.g., displayed as an overlay svg polygon). The widget 208 can be translucent to allow visual content 204 to be viewed by a user. In some implementations, the widget 208 can be resized by selecting a portion of the widget 208 with a user manipulable cursor or other suitable input and dragging the portion of the widget 208 across the display area 202. In some implementations, the widget 208 can be north-south oriented. The widget 208 can be rendered for display in a manner similar to that of the user interface 200.

The widget 208 can be represented as three-dimensional and can have an appearance corresponding to the three-dimensional body. For instance, the widget 208 can be rendered as a three-dimensional element on the display device 112 (e.g., screen). By way of example, in the event that the three-dimensional body is the Earth, the widget 208 can be circular (e.g., to represent the spherical Earth) and have graphics that depict similar land/water boundaries. In this way, the widget 208 can appear as an interactive, three-dimensional rendering of the three-dimensional body (e.g., a "mini globe" representing the Earth). The widget 208 can be presented as not simply a flat, Mercator projection. In some implementations, if the visual content 204 changes to represent another three-dimensional body (e.g., the Moon, Mars), the widget 208 can be adjusted such that it can have an appearance corresponding to the other three-dimensional body (e.g., a "mini moon", "mini Mars"). While the figures are provided in black and white line drawings, the widget 208 can include various colors and patterns to represent different portions of the three-dimensional body (e.g., land, water, terrain, topography). Moreover, while the widget 208 can be a three-dimensional rendering of the three-dimensional body (as described herein), in some implementations, the user may be able to select the widget 208 to be displayed in another manner (e.g., two-dimensional, fan shape, other map projections).

In some implementations, the widget 208 can include other contextual information associated with the visual content 204. By way of example, the visual content 204 can include a display showing infant mortality rate in different countries on the Earth. This can be represented by various features, such as different colors, icons, textures, keys, etc. The widget 208 can include similar such features to provide a user with contextual information about those regions of the Earth (e.g., the various infant mortality rates in each country). In some implementations, the widget 208 can include such contextual information although no such information is provided by the visual content 204 in the display area 202.

The widget 208 can be oriented such that a portion of the widget 208 corresponding to the location or region represented by the visual content 204 displayed in the user interface display area 202 is visible. By way of example, in the event that the visual content 204 in the display area 202 is showing a location on the continent of Africa, the widget 208 can be oriented such that its portion that corresponds to that location or region of Africa is visible to a user (e.g., as in FIG. 2A). The widget 208 can be rotatable about one or more axes of rotation 209. When an interaction with respect to the widget 208 is not currently being received (e.g., as further described herein), a relative orientation of the axis of rotation 209 and the display area 202 can be substantially constant. As the visual content 204 in the display area 202 changes, the visible portion of the widget 208 can also change (e.g., rotate about the axis 209), as further described herein.

The widget 208 can include an adjustable visual indicator 210. The visual indicator 210 can be configured to provide geo-context associated with the visual content 204 displayed in the display area 202. For instance, the visual indicator 210 can be configured to indicate on the widget 208 the location or region represented by the visual content 204 displayed in the display area 202 of the user interface 200. As shown in FIG. 2A, the visual indicator 210 can include a polygon 214 having a shape which delineates a portion of the widget 208 which corresponds to the visual content 204 displayed in the display area 202. The polygon 214 can indicate the location 206 (e.g., a location in Africa) represented by the visual content 204 displayed in the display area 202.

In some implementations, the shape of the polygon 214 of the visual indicator 210 can be based, at least in part, on a virtual camera 212. For example, the visual content 204 can be displayed in the display area 220 based, at least in part, on a virtual distance 216 between the virtual camera 212 and the three-dimensional body. The visual content 204 displayed in the display area 202 can include corner pixels 218 (e.g., in each corner of the view frustum) as well as edge pixels associated with the edges 220. A point of intersection between the respective corner pixel 218 and a ray that extends from a center of projection 222 of the virtual camera 212 can be determined for each of the corner pixels 218. Moreover, a point of intersection between an edge pixel and a ray that extends from the center of projection 222 can be determined for at least one pixel on each of the edges 220 of the visual content 204. This process can be implemented iteratively to determine the shape of the visual indicator 210, such that it corresponds to the view frustum of visual content.

One or more characteristics of the visual indicator 210 can be adjusted. For instance, the size and/or shape of the visual indicator 210 can be adjusted based, at least in part, on user interaction. The visual content 204 can be displayed based, at least in part, on an adjustable zoom level relative to a surface of the three-dimensional body. The zoom level can be dependent on a virtual distance between the virtual camera 212 and the three-dimensional body.

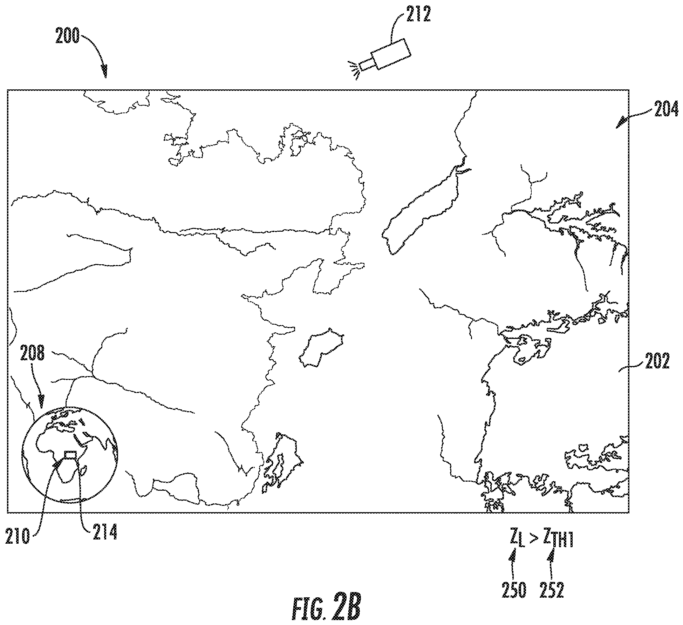

In some implementations, the visual indicator 210 can change size relative to the virtual distance 216 between the virtual camera 212 and the three-dimensional body (e.g., the zoom level increase/decrease, the view is zoomed in and out). For example, FIG. 2A shows the visual content 204 at a greater virtual distance (e.g., a more "zoomed-out" view) than the visual content 204 of FIG. 2B. Moreover, the display area 202 of FIG. 2A shows a larger portion of the continent of Africa than the display area 202 of FIG. 2B. The visual indicator 210 of FIG. 2A is a larger size than the visual indicator 210 of FIG. 2B. This can indicate to a user that a larger portion of the continent of Africa is being shown in the display area 202 of FIG. 2A than shown in FIG. 2B (e.g., a more "zoomed-in" view). In some implementations, the widget 208 itself can adjust in size based, at least in part, on the zoom level.

Additionally, and/or alternatively, the size of the visual indicator 210 can be based, at least in part, on the display area 202. For instance, in some implementations, the size of the visual indicator 210 can be adjusted to match (e.g., a size ratio of) the display area 202. While the accompany FIGS. are not to a reflective scale, and the polygon 214 can be configured to precisely match the display area 202 at any zoom level, regardless of that shown in the accompanying drawings.

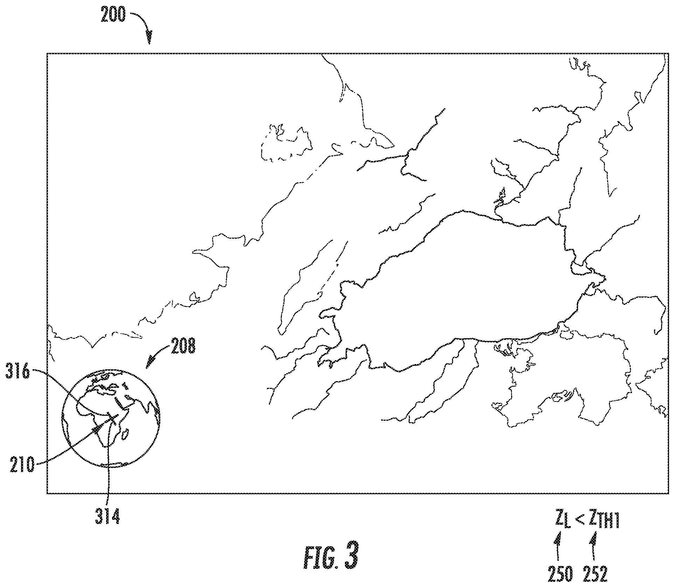

The visual indicator 210 can change form based, at least in part, on user interaction. The visual indicator 210 can be displayed in a first form when the zoom level is above a first zoom threshold and the visual indicator can be displayed in a second form when the zoom level is below the zoom threshold. For example, in FIG. 2B, the visual indicator 210 can be displayed in a first format (e.g., 214, a quadrilateral) indicating the location (e.g., a region of Africa) represented by the visual content 210 displayed in the display area 202. The zoom level 250 (e.g., Z_{L}) shown in FIG. 2B can be considered above the first zoom threshold 252 (e.g., Z_{TH1}). In FIG. 3, when the zoom level 250 is below (or equal to) the first zoom threshold 252, the visual indicator 210 can be displayed in a second format (e.g., 314, a cross hair, droplet). This second format can provide a more refined indicator of the location (e.g., a city in Africa) represented by the visual content 210 displayed in the display area 202.

In some implementations, the visual indicator 210 can include a shape configured to indicate an orientation associated with the visual content 204 displayed in the display area 202 relative to an orientation of the widget 208. For example, as shown in FIG. 3, the visual indictor 210 can include a shape 316 (e.g., arrow, line, pointer) that is configured to indicate the orientation and/or the heading of the visual content 204. In some implementations, the shape 316 can be a portion of the first format 214 and/or second format 314 (e.g., cross hair, droplet). Moreover, in some implementations, the shape 316 can include a different color than the rest of the visual indicator 210. The shape 316 can be adjusted (e.g., indicating a new direction) as the user adjusts (e.g., rotates) the orientation and/or heading of the visual content 204. In some implementations, only the visual indicator 210 (not the widget 208) can change to indicate the heading as the user adjusts (e.g., rotates) the orientation and/or heading of the visual content 204.

Additionally, and/or alternatively, the visual indicator 210 can be adjusted based, at least in part, on a tilt control associated with the visual content 204. For example, the user interface 200 can include a tilt control element that allows a user to control the tilt viewing level associated with the visual content 204. As the tilt level is adjusted, the shape of the polygon 214 can be adjusted from a first form (e.g., a rectangle) to a second form (e.g., a trapezoid) to indicate the change in the tilt level associated with the visual content 204 displayed in the display area 202. In some implementations, only the visual indicator 210 of the widget 208 can change with adjustment of the tilt level (and/or zoom level).

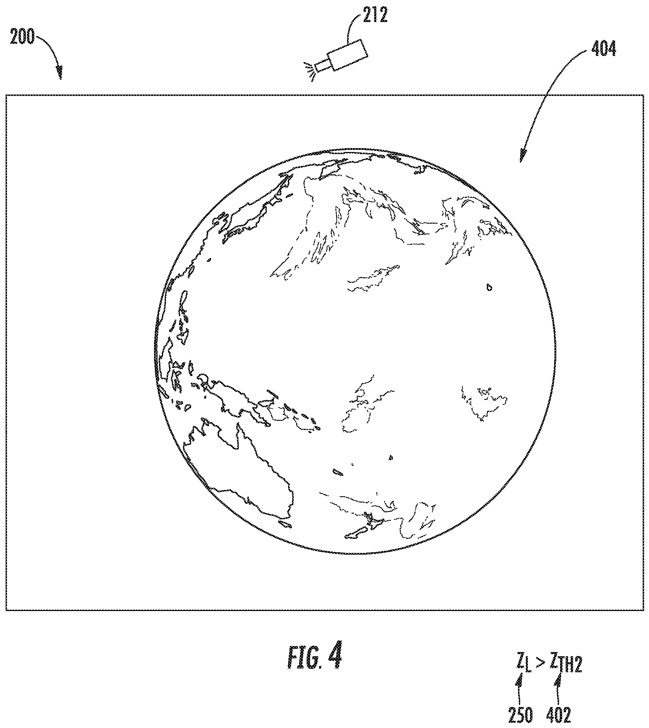

The widget 208 and/or the visual indicator 210 can appear, disappear, and/or re-appear based, at least in part, on the zoom level. For example, as described herein, the widget 208 and/or the visual indicator 210 can be displayed based, at least in part on an adjustable zoom level 250 relative to a surface of the three-dimensional body. As shown in FIG. 4, when the zoom level 250 is above a second zoom threshold 402 (e.g., Z_{TH2}), the widget 208 and/or the visual indicator 210 can disappear. The second zoom threshold 402 can be defined by a certain virtual distance 216 between the virtual camera 212 and the three-dimensional body 404. As shown in FIG. 4, for example, the entire Earth can be viewed by a user in the user interface 200. As such, the widget 208 may not be needed for geo-context and, thus, can be hidden at such a zoom level.

In some implementations, the widget 208 and/or the visual indicator 210 can disappear when the zoom level 250 is below a third zoom threshold (e.g., a high level of zoom, a small virtual distance 216). This can occur, for example, to hide the widget 208 during a street level view of the visual content 204 so that the widget 208 does not obstruct the view of the user. In some implementations, the user can select to hide the widget 208, by interacting with the interface 200 and/or the widget 208 (e.g., cursor click, menu selection, element toggle).

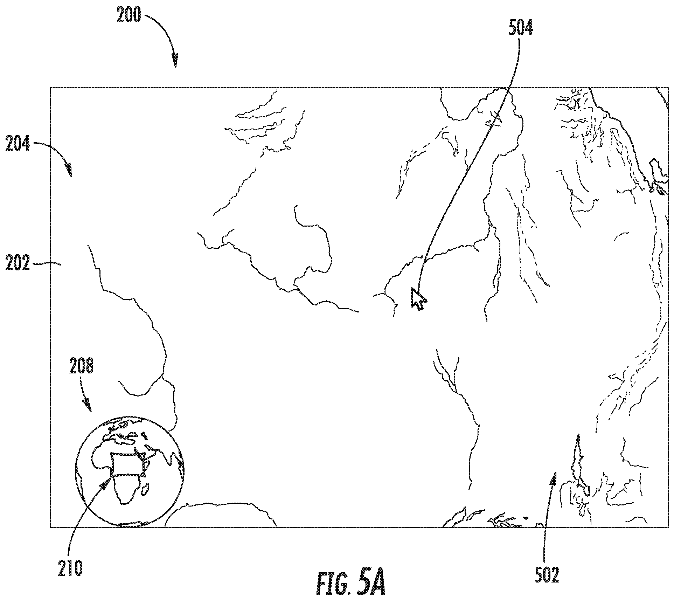

At least one of the visual content 204, the widget 208, and/or the visual indicator 210 can be adjusted based, at least in part, on user input. For example, FIGS. 5A-B illustrate a user interaction with the display area 202 of the user interface 200 according to example embodiments of the present disclosure. As shown in FIG. 5A, the visual content 204 can represent an original location 502 on the three-dimensional body 404. The visual indicator 210 can indicate on the widget the original location 502 represented by the visual content 204 displayed in the display area 202. A user can provide user input via a user manipulable cursor 504 (or other suitable input).

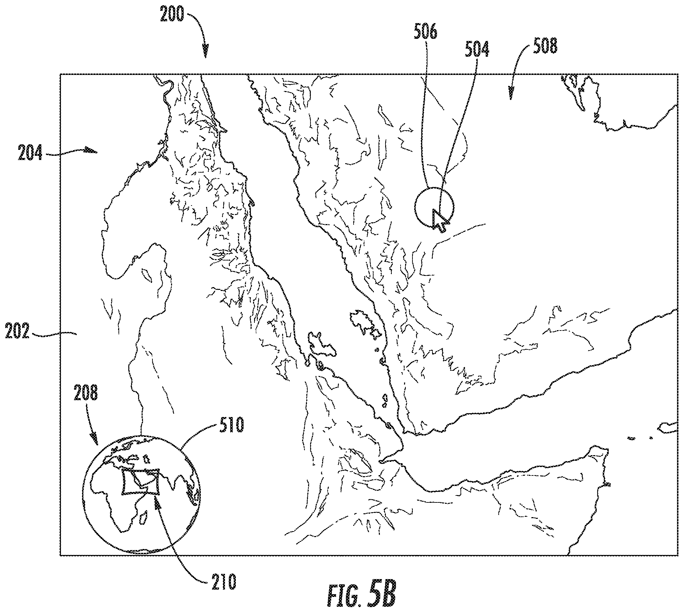

As shown in FIG. 5B, a user input 506 can be directed to the display area 202. For example, the user can manipulate the cursor 504 to select, click, double-click, tap, drag, etc. a new location 508 to be represented by the visual content 204. The visual content 204 in the display area 202 can be adjusted such that it corresponds to the new location 508 (e.g., as shown in FIG. 5B). Such a rendering can be accomplished by accessing map data associated with the new location 508 (e.g., coordinates thereof), and utilizing such data to render the visual content 204 representing the new location 508. In some implementations, the data associated with the new location 508 can be preloaded and/or precached at a user device 104 associated with user interface 200 for smooth transition to the new location 508.

The widget 208 can be adjusted based, at least in part, on the user input 506. For example, the widget 208 can be adjusted (e.g., rotated) such that a portion of the widget 208 which corresponds to the new location 508 is visible (e.g., as shown in FIG. 5B). In some cases, the widget 208 can be adjusted such that the portion corresponding to the new location 508 is more prominently displayed (e.g., more centrally displayed on the widget). As such, when the user input 506 is directed to the user interface display area 202, at least a visible portion of the widget 208 adjusts such that it is consistent with the visual content 204 presented in the display area 202. In some implementations, the position of the widget 208 within the user interface 200 can remain static during adjustment. For example, a perimeter 510 of the widget 208 can remain in the same (or substantially the same) position as prior to the user input 506. In some implementations, the position of the widget 208 within the user interface 200 can change based, at least in part, on user input.

Additionally, and/or alternatively, the visual indicator 210 can be adjusted based, at least in part, on the user input 506 directed to the display area 202. For example, the visual indicator 210 can change position on the widget 208 to indicate, on the widget 208, the new location 508 represented by the visual content 204 displayed in the display area 202. In some implementations, characteristics of the visual indicator 210 can change based, at least in part, on the user input 506. For instance, the size, shape, color, etc. of the visual indicator 210 can change to indicate that the new location 508 has been selected for viewing in the display area 202.

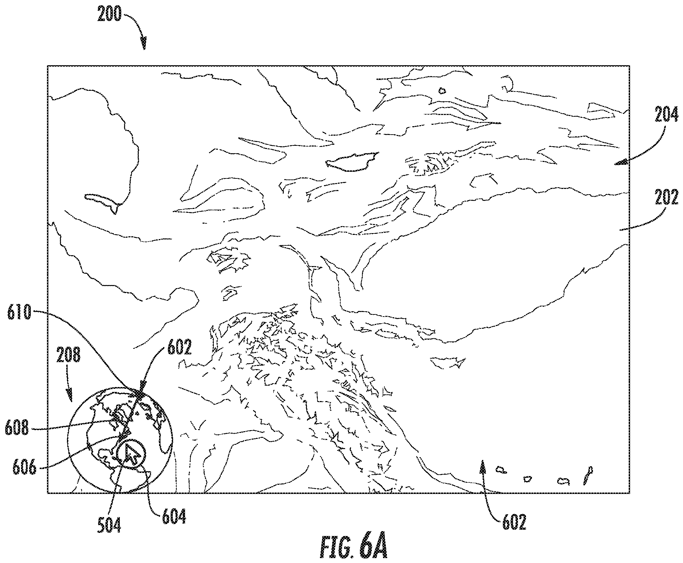

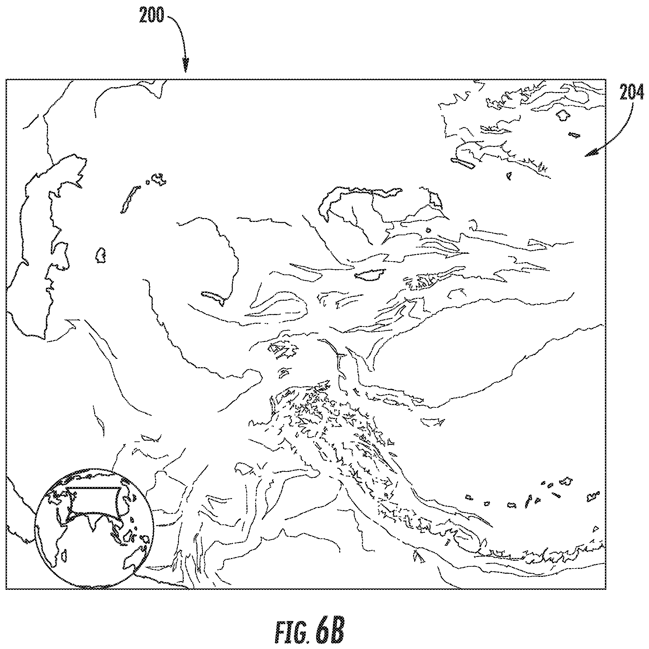

FIGS. 6A-F illustrate a user interaction with the widget 208 according to example embodiments of the present disclosure. As shown in FIG. 6A, the visual content 204 can represent an original location 602 on the three-dimensional body 404. A user can interact with the widget 208 via the cursor 504 to provide a user input 604 directed to the widget 208. The user input 604 can be a navigation interaction directed to a new location 606. For example, the user input 604 can include a click, tap, double-click, etc. on a portion of the widget 208 associated with a new location 606. The widget 208 can be adjusted (e.g., rotated) such that the portion of the widget 208 associated with the new location 606 is more prominently visible (e.g., centrally located on the visible portion of the widget 208). For instance, to do so, the computing device(s) 108, 114 can determine a reverse projection of the latitude/longitude of the new location 606 and adjust the widget 208 and/or the visual indicator 210 based, at least in part, on the latitude/longitude of the new location 606. The visual indicator 210 can be adjusted to indicate the new location 606 on the widget 208. Moreover, the visual content 204 presented in the display area 202 can be adjusted such that it is consistent with the visual portion of widget 208 associated with the new location 606 (e.g., such that the visual content 204 represents the new location 606).

In some implementations, the user can click on the widget 208 and drag the widget 208 to a select the new location 606. The new location 606 can be a location that was not initially represented on the visible portion of the widget 208, however, the user input 604 (e.g., dragging) can cause the widget 208 to rotate such that one or more portion(s) of the widget 208 are visible, such as a portion corresponding to the new location 606.

During receipt of the user input 604, a second indicator 608 can be displayed on the widget 208. For example, as the widget 208 is dragged to select the new location 606, the second indicator 608 can be displayed. The second indicator 608 (e.g., an arrow, line) can extend from a first portion of the widget corresponding to the original location 602 to a second portion of the widget corresponding to the new location 606. The second indicator 608 can include a path from the original location 602 to the new location 606. In some implementations, the visual indicator 210 can be displayed in a new form (e.g., a dot) indicative of the original location 602 on the widget 208 (e.g., located at the would-be center of the polygon 214). In some implementations, the visual indicator 210 can disappear during receipt of the user input 604.

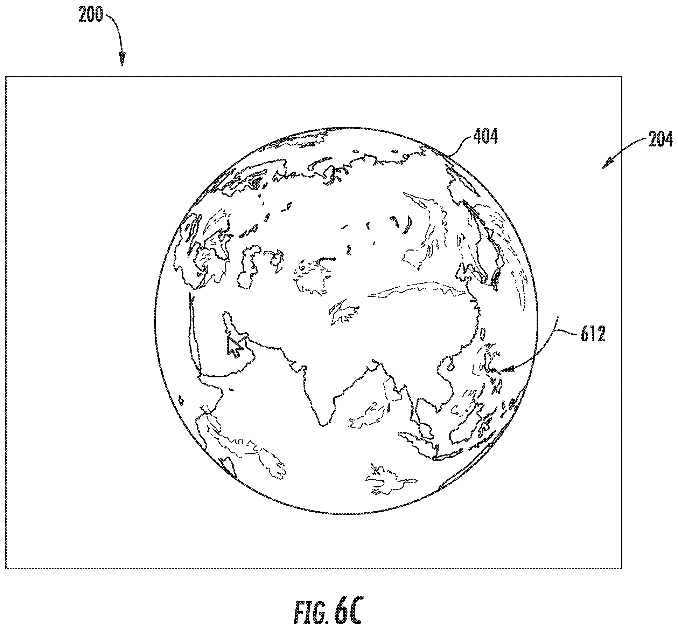

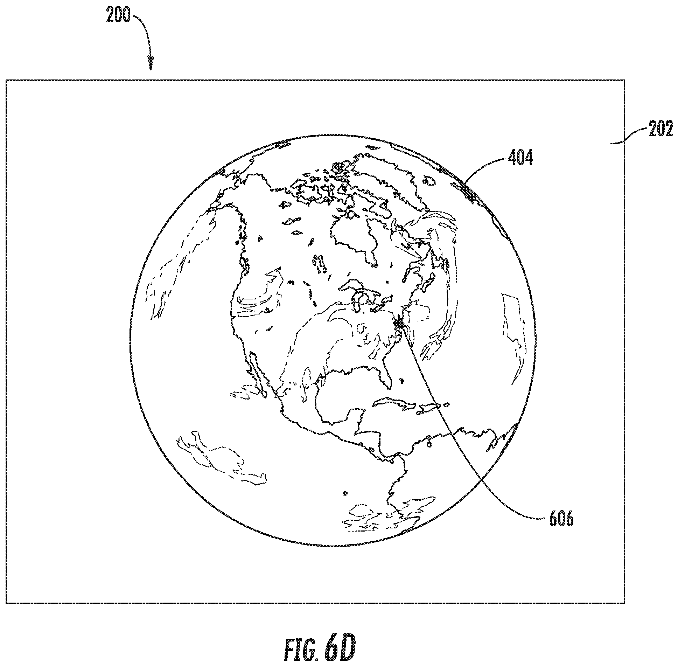

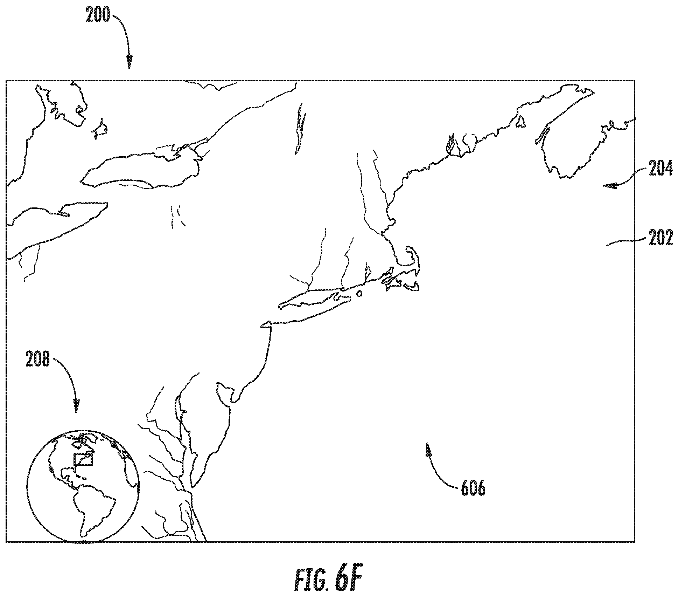

The visual content 204 presented in the display area 202 can be adjusted such that it corresponds to the new location 606. For example, the user interface 200 can display an animation associated with the visual content 204 representing navigation from the visual content 204 representing the original location 602 to the visual content 204 representing the new location 606. The animation can include zooming out from the visual content 204 representing the original location 602, as shown from FIGS. 6A-C. The zooming out can continue, for example, until the entire three-dimensional body 404 is visible, as shown in FIG. 6C. The animation can include rotation of the three-dimensional body 404. This can include rotating the three-dimensional body 404 in the direction 612 until a zoomed out view of the portion of three-dimensional body 404 including the new location 606 is presented in the display area 202, as shown in FIG. 6D. The animation can further include zooming in to the visual content 204 representing the new location 606 (e.g., as shown in FIG. 6F). The animation can stop at a fixed zoom level/altitude with the heading North. In some implementations, the "fly over" path of the animation can be consistent with that shown by the second indicator 108.

The rendering of the visual content 204 can be based, at least in part, on the latitude/longitude of the new location 606. For instance, upon selection of the new location 606, data associated with the new location 606 can be retrieved (e.g., from database 110) and rendered to present the visual content 204 representing the new location 606. This can be done for each portion of the animation. Intermediate portions can be based, at least in part, on the path shown by second indicator 208.

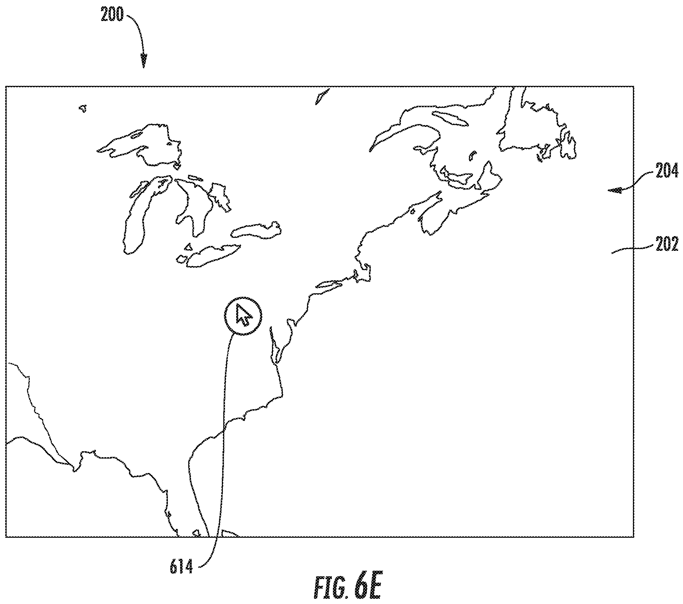

In some implementations, a user can provide a user interaction to temporarily or permanently stop the animation. With reference to FIG. 6E, a user input 614 (e.g., a click, tap, double click) directed to the display area 202 can temporarily or permanently stop the animation at a current view (e.g., as shown in FIG. 6E). In some implementations, the widget 208 can remain hidden until additional user input is provided. Additionally, and/or alternatively, the widget 208 can be automatically displayed in the event that the user input 614 stops the animation at a current view which would typically include display of the widget 208 (e.g., when the view is at a zoom level appropriately within the zoom thresholds).

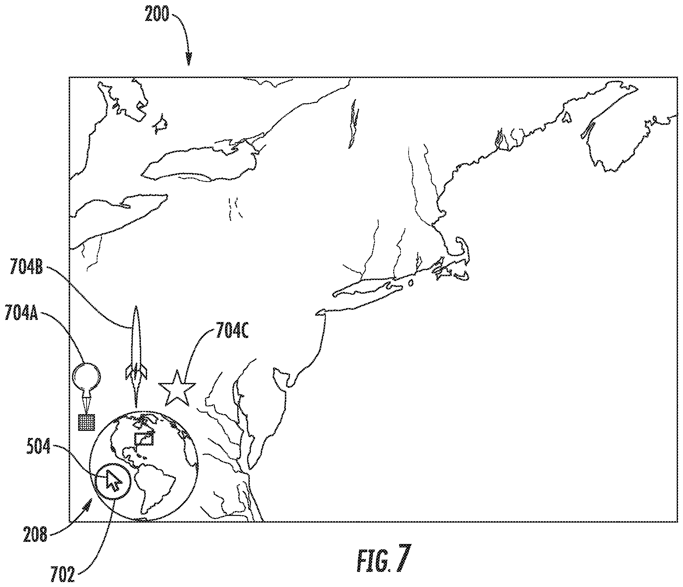

FIG. 7 depicts the user interface 200 including the widget 208 with user-selectable options according to example embodiments of the present disclosure. A user input 702 can be provided via the cursor 504. The user input 702 can be a selection interaction directed to the widget 208 and/or the display area 202. The user input 702 (e.g., a single click on the widget 208) can cause the display of one or more user-selectable option(s) 704A-C. In some implementations, the user-selectable option(s) 704A-C to be displayed when the cursor 504 is scrolled over the widget 208, but disappear when the cursor 504 is scrolled away from the widget 208. In some implementations, a second user input (e.g., another click, double-click) can cause the user-selectable option(s) 704A-C to be locked for display.

The user-selectable option(s) 704A-C can be selected by a user for a variety of functions. For example, a user interaction directed to a first user-selectable option 704A can cause an animation (e.g., a "fly over" animation) of a portion of the three-dimensional body 404 at one or more zoom levels. In some implementations, the zoom level may be fixed while in some implementations, the animation may include a variety of zoom levels. During the animation, various locations-of-interest can be indicated to the user via text, icon, the visual indicator 210, etc. Additionally, and/or alternatively, the widget 208 and/or the visual indicator 210 can be adjusted during the animation to be consistent with the location(s) shown in the visual content 204 displayed in the display area 202. User interaction directed to a second user-selectable option 704B can cause the visual content 204 to zoom-out such that the entire three-dimensional body 404 is shown (e.g., as in FIG. 4). User interaction directed to a third user-selectable option 704C can cause a random selection of a new location to be shown in the visual content 204 displayed in the display area. In such implementations, the widget 208 and/or visual indicator 210 can be adjusted accordingly.

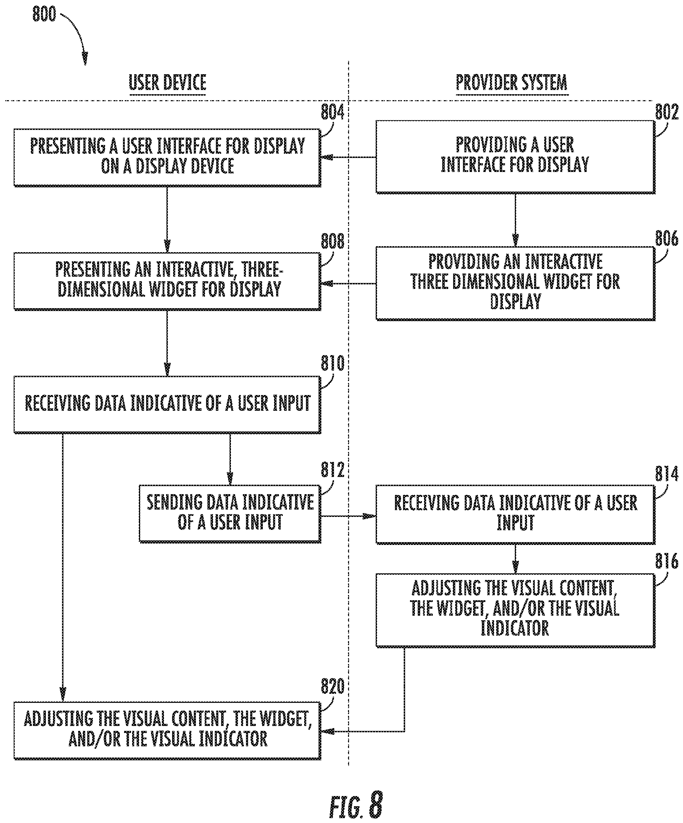

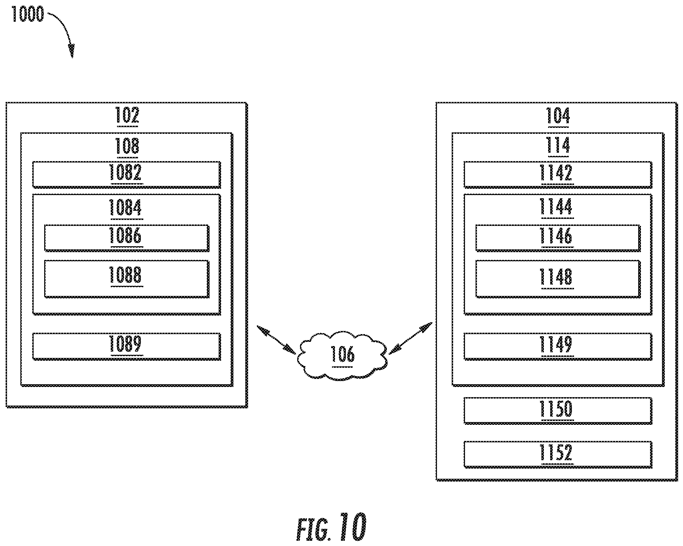

FIG. 8 depicts a flow chart of an example method 800 of an interactive, geo-contextual interface according to example embodiments of the present disclosure. One or more portion(s) of method 800 can be implemented by a provider system, user device, and/or one or more computing device(s) such as, for example, those shown in FIGS. 1 and 10. FIG. 8 depicts steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure.

At (802), the method can include providing a user interface for display. For instance, the computing device(s) 108 of the provider system 102 can provide the user interface 200 for display on a display device 112 of a user device 104. The user interface 200 can include a display area 202 for presenting visual content 204. The visual content 204 can represent an original location (e.g., 502) on a three-dimensional body 404. The three-dimensional body can be, for example, a representation of the Earth. The computing device(s) 108 of the provider system 102 can provide data indicative of the user interface 200 to the computing device(s) 114 of the user device 104. The computing device(s) 114 of the user device 104 can receive the data indicative of the user interface 200. At (804), the computing device(s) 114 of the user device 104 can present the user interface 200 for display on the display device 112. The user interface 200 can include the display area 202 for presenting visual content 204 and the visual content 204 can represent the original location on the three-dimensional body, as described above.

At (806), the method can include providing an interactive widget for display. For instance, the computing device(s) 108 of the provider system 102 can provide an interactive widget 208 for display on the display device 112. The computing device(s) 108 can send data indicative of the widget 208 to the computing device(s) 114 of the user device 104. The computing device(s) 114 can receive such data and present the interactive widget for display on the display device1 12, at (808).

The widget 208 can be represented as three-dimensional and can have an appearance corresponding to the three-dimensional body 404 (e.g., a "mini globe", "mini moon", "mini Mars", "mini structure", "mini part"). The widget 208 can be oriented such that a portion of the widget 208 corresponding to the original location (e.g., 502) represented by the visual content 204 displayed in the user interface display area 202 is visible. The widget 208 can be rotatable about an axis of rotation 209. When an interaction with respect to the widget 208 is not currently being received, a relative orientation of the axis of rotation 209 and the display area 202 can be substantially constant. Additionally, and/or alternatively, the widget 208 can be displayed based, at least in part, on an adjustable zoom level relative to a surface of the three-dimensional body 404, as described herein.

The widget 208 can include an adjustable visual indicator 210 configured to provide geo-context associated with the visual content 204 displayed in the display area 202. For example, the visual indicator 210 can be configured to indicate on the widget 208 the original location (e.g., 502) represented by the visual content 204 displayed in the display area 202. The visual indicator 210 can include a polygon 214 having a shape which delineates a portion of the widget 208 which corresponds to the visual content 204 displayed in the display area 202. In some implementations, the visual indicator 210 (e.g., including shape 316) can be configured to indicate an orientation associated with the visual content 204 displayed in the user interface display area 202 relative to an orientation of the three-dimensional widget 208.

As described herein, the appearance of the visual indicator 210 can be based, at least in part, on a zoom level associated with the visual content 204. For example, the visual content 204 can be displayed based, at least in part, on an adjustable zoom level relative to a surface of the three-dimensional body 402. The visual indicator 210 can be displayed in a first form (e.g., shown in FIG. 2B) when the zoom level 250 is above a zoom threshold 252. Additionally, and/or alternatively, the visual indicator 210 can be displayed in a second form (e.g., shown in FIG. 3) when the zoom level 250 is below the zoom threshold 252. In some implementations, the computing device(s) 108, 114 can cause the visual indicator 210 to disappear when the zoom level 250 is above a second zoom threshold, as described herein.

At (810), the method can include receiving data indicative of a user input. For instance, the computing device(s) 114 of the user device 104 can receive data indicative of a user input (e.g., 506, 604, 614) directed to at least one of the display area 202 and/or the widget 208. In some implementations, at (812) the computing device(s) 114 can send data indicative of the user input and the computing device(s) 108 of the provider system 102 can receive the data indicative of the user input, at (814). In some implementations, at (816) the computing device(s) 108 of the provider system 102 can adjust at least one of the visual content 204, the widget 208, and/or the visual indicator 210 based, at least in part, on the data indicative of the user input. The provider system 102 can provide data indicative of such an adjustment to the computing device(s) 114 of the user device 104, which can adjust the visual content 204, the widget 208, and/or the visual indicator 210, at (820). Additionally, and/or alternatively, the computing device(s) 114 may not send such data to the provider system 102 and/or may adjust at least one of the visual content 204, the widget 208, and/or the visual indicator 210 based, at least in part, on the data indicative of the user input (e.g., without receiving instruction from the provider system 102).

In some implementations, as described herein, the user input (e.g., 506) can be directed to the user interface display area 202. The computing device(s) 108 and/or 114 can adjust the visual indicator 210 based, at least in part, on the user input 502 directed to the user interface display area 202. For example, the visual indicator 210 can change position and/or orientation on the widget 208 to indicate, on the widget 208, a new location and/or heading represented by the visual content 204 displayed in the display area 202. The computing device(s) 108 and/or 114 can also, and/or alternatively, adjust the widget 208 based, at least in part, on the user input 502 directed to the user interface display area 202. For example, the user input 506 can be a navigation interaction directed to a new location 508. The computing device(s) 108 and/or 114 can adjust the widget 208 such that a portion of the widget 208 which corresponds to the new location 508 is visible.

In some implementations, the user input (e.g., 604) can be directed to the widget 208. For example, the user input 604 can be a navigation interaction directed to a new location 606. As described herein, during receipt of the user input 604, the computing device(s) 108 and/or 114 can present, for display on the widget 208, a second indicator 608 extending from the original location 602 to the new location 606. In some implementations, the computing device(s) 108 and/or 114 can cause the visual indicator 210 to disappear during receipt of the user input 604. Moreover, the visual content 204 presented in the display area 202 can be adjusted such that it corresponds to the new location 606. For example, the computing device(s) 108 and/or 114 can present an animation associated with the visual content 204 representing navigation from the original location 602 to the new location 606, as described with reference to FIGS. 6A-F. Additionally, and/or alternatively, the computing device(s) 108 and/or 114 can cause display of one or more user-selectable options 704A-C based, at least in part, on user input directed to the widget 208.

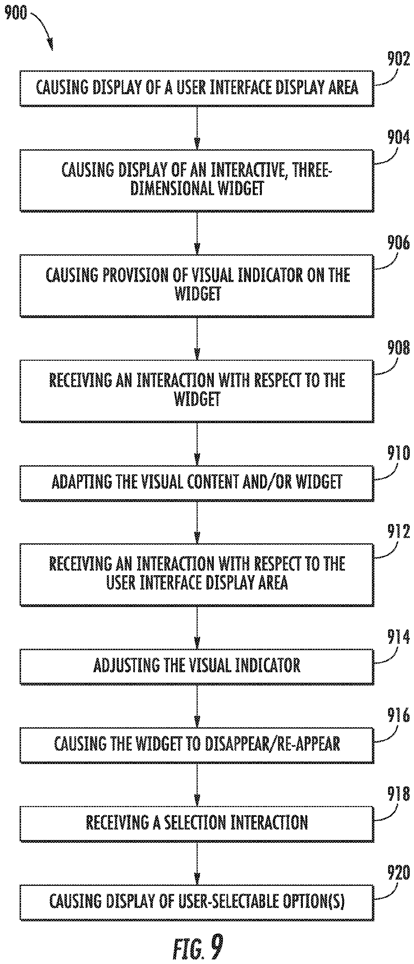

FIG. 9 depicts a flow chart of an another example method 900 according to example embodiments of the present disclosure. One or more portion(s) of method 900 can be implemented by a provider system, user device, and/or one or more computing device(s) such as, for example, those shown in FIGS. 1 and 10. FIG. 9 depicts steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure. Moreover, any of the steps of the method 800 can be implemented in method 900 and/or any of the steps of method 900 can be implemented in the method 800.

At (902), the method 900 can include causing display of a user interface display area 202 in which is displayed visual content 204 representing an original location or region on a three-dimensional body 404. For example, as shown in FIG. 2A, the visual content 204 can show a location or region (e.g., 206) in the continent of Africa.

At (904), the method 900 can include causing display of an interactive, three-dimensional widget 208 having a shape corresponding to that of the three-dimensional body 404. The widget 208 can include a shape to match the curvature and/or contour of the three-dimensional body. For example, in the event that the three-dimensional body 404 is a planet, the widget 208 can include a circular shape to represent the spherical curvature of the planet. In some implementations, the interactive, three-dimensional widget 208 can be oriented such that a portion of the widget 208 corresponding to the location or region represented by the visual content 204 displayed in the user interface display area 202 is visible, as described herein.

The method 900 can include causing provision on the interactive, three-dimensional widget 208 of a visual indicator 210, at (906). The visual indicator 210 can be configured to indicate on the widget 208 the location or region represented by the visual content 204 displayed in the user interface display area 202. For instance, the visual indicator 210 can include a polygon 214 having a shape which delineates a portion of the surface of the three-dimensional widget 208 which corresponds to the visual content 204 displayed in the user interface display area 202 (e.g., as shown in FIG. 2A).

In some implementations, the shape of the polygon 214 can be based, at least in part, on the position of the virtual camera 212 and the pixels of the visual content 204. For instance, the visual content 204 displayed in the user interface display area 202 can be dependent on a virtual distance 216 between a virtual camera 212 and the three-dimensional body. The shape of the polygon 214 can be calculated by, for each of the corner pixels 218 of the visual content 204 displayed in the user interface display area 202, determining a point of intersection between the corner pixel 218 and a ray that extends from a center of projection 222 of the virtual camera 212, and for at least one pixel on each of the edges 220 of the visual content 204 displayed in the user interface display area 202, determining a point of intersection between the edge pixel and a ray that extends from the center of projection 222 of the virtual camera 212. The shape of the polygon 214 can be defined by the determined points of intersection.

As described herein, the display of the visual indicator 210 can be based, at least in part, on the virtual distance 216. For example, the visual content 204 displayed in the user interface display area 202 can be dependent on the virtual distance 216 between the virtual camera 212 and the three-dimensional body. If the virtual distance 216 is above a threshold (e.g., a virtual distance threshold similar to the zoom threshold 252), the method can include providing the indicator 210 in a first form (e.g., 214, a quadrilateral) configured to delineate an area on the three-dimensional widget 208 corresponding to the location or region represented by the visual content 204 displayed in the user interface display area 202. If the virtual distance 216 is below the threshold, the method can include providing the indicator 210 in a second, different form (e.g., 314, a cross hair, droplet) configured to indicate a location on the widget 208 corresponding to the location or region represented by the visual content 204 displayed in the user interface display area 202.

At (908), the method 900 can include receiving an interaction with respect to the interactive, three-dimensional widget 208. For example, the received interaction (e.g., 604) with respect to the interactive, three-dimensional widget 208 can include a navigation interaction. In some implementations, during receipt of the navigation interaction, the method can include causing display on the three-dimensional widget 208 of a path (e.g., indicator 608) from the original location or region (e.g., 602) to the new location or region (e.g., 606).

At (910), the method 900 can include adapting the visual content 204 and/or the widget 208 based, at least in part, on the received interaction. For example, the method 900 can include responding to receipt of the navigation interaction by causing rotation of the interactive three-dimensional widget 208 such that a portion of the widget 208 which corresponds to the new location or region (e.g., 606) is visible on the display. Additionally, and/or alternatively, method 900 can include responding to receipt of an interaction with respect to the interactive, three-dimensional widget 208 by adapting the visual content 204 displayed in the user interface display area 202 based on the received interaction. Adapting the visual content 204 displayed in the user interface display area 202 can include causing display of visual content 204 representing a new location or region (e.g., 606) on the three-dimensional body based on the navigation interaction (e.g., as shown in FIG. 6F).

In some implementations, adapting the visual content 204 displayed in the user interface display area 202 can include causing display of an animation representing navigation from the visual content representing the original location or region (e.g., 602) to the visual content representing the new location or region (e.g., 606). As described herein, the animation can include zooming out from the visual content 204 representing the original location or region until the entire body is visible in the user interface display area 202 (e.g., as shown in FIG. 6C), rotating the three-dimensional body 402 (e.g., as shown in FIGS. 6C-D) and zooming in to the visual content representing the new location or region (e.g., as shown FIG. 6F). The method 900 can include, during display of the animation, responding to receipt of an interaction (e.g., 614) in respect of the user interface display area 202 by stopping the animation at a current view as shown, for example, in FIG. 6E.

At (912), the method 900 can include receiving an interaction (e.g., 506) with respect to the user interface display area 202. At (914), the method can include responding to receipt of an interaction (e.g., 506) with respect to the user interface display area 202 by adjusting the visual indicator 210 or the widget 208 based on the interaction. For example, the visual indicator 210 and/or the widget 208 can be adjusted as described above with respect to FIGS. 5A-B.

At (916), the method 900 can include causing the widget to disappear and/or reappear. For instance, the method 900 can include determining that the visual content 204 representing the location or region of the three-dimensional body 404 no longer fills the entire user interface display area 202. This can occur, for instance, when one of the rays from a corner pixel 218 (e.g., at the corner of the view frustum) does not interest the three-dimensional body (e.g., the Earth), which can indicate that the three-dimensional body 404 does not encompass the entire display area. Accordingly, the method 900 can include responding to a determination that the visual content 204 representing the location or region of the three-dimensional body 404 no longer fills the entire user interface display area 202 by causing the interactive, three-dimensional widget 208 to disappear. In some implementations, subsequent to causing the interactive, three-dimensional widget 208 to disappear, the method 900 can include responding to a determination that the visual content 204 representing the location or region of the three-dimensional body 404 fills the entire user interface display area 202 by causing the interactive, three-dimensional widget 208 to re-appear.

At (918) and (920), the method 900 can include receiving a selection interaction (e.g., 702) and causing the display of user selectable option(s) 704A-C. For example, as described herein, a selection interaction (e.g., associated with user input 702) can be provided with respect to the widget 208. The method 900 can include responding to receipt of a selection interaction in respect of the interactive, three-dimensional widget 208 by causing display of one or more user-selectable options 704A-C.

FIG. 10 depicts an example system 1000 according to example embodiments of the present disclosure. The system 1000 can be implemented using a client-server architecture that includes the provider computing system 102 that communicates with one or more user device(s) 104 over the network 710. The system 700 can be implemented using other suitable architectures, such as a single computing device.

The provider system 102 can include, for instance, a web server and/or a cloud-based server system. The provider system 102 can be implemented using any suitable computing device(s) 108. The computing device(s) 108 can include one or more processors 1082 and one or more memory devices 1084. The one or more processors 1082 can include any suitable processing device, such as a microprocessor, microcontroller, integrated circuit, an application specific integrated circuit (ASIC), a digital signal processor (DSP), a field-programmable gate array (FPGA), logic device, one or more central processing units (CPUs), graphics processing units (GPUs), processing units performing other specialized calculations, etc.

The one or more memory devices 1084 can include one or more computer-readable media, including, but not limited to, non-transitory computer-readable media, RAM, ROM, hard drives, flash drives, or other memory devices. The one or more memory devices 1084 can store information accessible by the one or more processors 1082, including computer-readable instructions 1086 that can be executed by the one or more processors 1082. The instructions 1086 can be any set of instructions that when executed by the one or more processors 1082, cause the one or more processors 1082 to perform operations. In some embodiments, the instructions 1086 can be executed by the one or more processor(s) 1082 to cause the one or more processor(s) 1082 to perform operations, such as any of the operations and functions for which the provider system 102 and/or the computing device(s) 108 are configured, the operations for providing an interactive, geo-contextual interface (e.g., methods 800, 900), and/or any other operations or functions for providing a user interface and a widget, receiving user input, and adjusting the visual content, the widget, and/or a visual indicator, as described herein. The instructions 1086 can be software written in any suitable programming language or can be implemented in hardware. Additionally, and/or alternatively, the instructions 1086 can be executed in logically and/or virtually separate threads on processor(s) 1082.

As shown in FIG. 10, the one or more memory devices 1084 can also store data 1088 that can be retrieved, manipulated, created, or stored by the one or more processors 1082. The data 1088 can include, for instance, data associated with user interfaces, the widget 208, user input, mapping data, and/or other data or information. For instance, the data 1088 can include map-related information, at least a portion of which may be transmitted to a user device. For example, data 1088 can include map tiles where each tile is a map image of a particular geographic area/location. Depending on the resolution (e.g., whether the map is zoomed in or out), one tile may cover an entire region such as a state in relatively little detail. Another tile may cover just a few elements (e.g., streets) in high detail. The map information is not limited to any particular format. For example, the images may comprise street maps, satellite images, or a combination of these, and may be stored as vectors (particularly with respect to street maps) or bitmaps (particularly with respect to satellite images). The various map tiles can each be associated with geographical locations, such that the computing device(s) 108 are capable of selecting, retrieving and transmitting one or more tiles in response to receipt of a user input and/or location.

The data 1088 can be stored in one or more databases (e.g., database 110). The one or more databases can be connected to the computing device(s) 108 by a high bandwidth LAN or WAN, or can also be connected to computing device(s) 108 through network 106. The one or more databases can be split up so that they are located in multiple locales.

The computing device(s) 108 can also include a network interface 1089 used to communicate with one or more other component(s) of the system 1000 (e.g., user device 104) over the network 106. The network interface 1089 can include any suitable components for interfacing with one more networks, including for example, transmitters, receivers, ports, controllers, antennas, or other suitable components.

The computing device(s) 108 can exchange data with one or more user device(s) 104 over the network 106. Although one user device 104 is illustrated in FIG. 10 (and herein), any number of user devices 104 can be connected to computing device(s) 108 over the network 106. Each of the user devices 104 can be any suitable type of computing device, such as a general purpose computer, special purpose computer, laptop, desktop, mobile device, navigation system, smartphone, tablet, wearable computing device, a display with one or more processors, or other suitable computing device, as described herein.

The user device 104 can include one or more computing device(s) 114. The one or more computing device(s) 114 can include one or more processor(s) 1142 and a memory 1144. The one or more processor(s) 1142 can include any suitable processing device, such as a microprocessor, microcontroller, integrated circuit, an application specific integrated circuit (ASIC), a digital signal processor (DSP), a field-programmable gate array (FPGA), logic device, one or more central processing units (CPUs), graphics processing units (GPUs) (e.g., dedicated to efficiently rendering images), processing units performing other specialized calculations, etc.

The memory device(s) 1144 can include one or more computer-readable media and can store information accessible by the one or more processors 1142, including instructions 1146 that can be executed by the one or more processors 1142 and data 1148. For instance, the memory 1144 can store instructions 1146 for implementing a user interface module for displaying a user interface and widget according to example aspects of the present disclosure. In some embodiments, the instructions 1146 can be executed by the one or more processor(s) 1142 to cause the one or more processor(s) 1142 to perform operations, such as any of the operations and functions for which the user device 104 and/or the computing device(s) 114 are configured, the operations for providing an interactive, geo-contextual interface (e.g., methods 800, 900), and/or any other operations or functions for providing a user interface and a widget, receiving user input, and adjusting the visual content, the widget, and/or a visual indicator, as described herein. The instructions 1146 can be software written in any suitable programming language or can be implemented in hardware. Additionally, and/or alternatively, the instructions 1146 can be executed in logically and/or virtually separate threads on processor(s) 1142.

The data 1148 can be retrieved, manipulated, created, or stored by the one or more processors 1142. The data 1148 can include, for instance, data associated with user interfaces, the widget 208, user input, mapping data, and/or other information. In some implementations, the data 1148 can be received from another device (e.g., computing device(s) 108).

The user device 104 can include various input/output devices 1150 for providing and receiving information from a user. An input device can include, for example, a mouse, trackball, a touch screen, touch pad, data entry keys, a microphone suitable for voice recognition, and/or any other suitable input device. The input/output devices 1150 can include the display device 112 for presenting a user interface and the widget according to example aspects of the present disclosure. The display device 112 can include, for example, a CRT, LCD, plasma screen, touch screen, TV, projector, and/or any other suitable display device.

The user device 104 can also include a network interface 1152 used to communicate with one or more other components of system 1000 (e.g., provider system 102) over the network 106. The network interface 1152 can include any suitable components for interfacing with one more networks, including for example, transmitters, receivers, ports, controllers, antennas, or other suitable components.

The network 106 can be any type of communications network, such as a local area network (e.g. intranet), wide area network (e.g. Internet), cellular network, or some combination thereof. The network 106 can also include a direct connection between a user device 104 and the provider system 102. In general, communication between provider system 102 and a user device 104 can be carried via network interface using any type of wired and/or wireless connection, using a variety of communication protocols (e.g. TCP/IP, HTTP, SMTP, FTP), encodings or formats (e.g. HTML, XML), and/or protection schemes (e.g. VPN, secure HTTP, SSL).

The technology discussed herein makes reference to servers, databases, software applications, and other computer-based systems, as well as actions taken and information sent to and from such systems. One of ordinary skill in the art will recognize that the inherent flexibility of computer-based systems allows for a great variety of possible configurations, combinations, and divisions of tasks and functionality between and among components. For instance, server processes discussed herein can be implemented using a single server or multiple servers working in combination. Databases and applications can be implemented on a single system or distributed across multiple systems. Distributed components can operate sequentially or in parallel.

Furthermore, computing tasks discussed herein as being performed at a server can instead be performed at a user device. Likewise, computing tasks discussed herein as being performed at the user device can instead be performed at the server.

While the present subject matter has been described in detail with respect to specific example embodiments and methods thereof, it will be appreciated that those skilled in the art, upon attaining an understanding of the foregoing can readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art. The present disclosure also includes a number of further examples, as outlined in the following numbered items.
1. A method comprising:
   causing display of a user interface display area in which is displayed visual content representing an original location or region on a three-dimensional body;
   causing display of an interactive, three-dimensional widget having a shape corresponding to that of the three-dimensional body; and
   responding to receipt of an interaction with respect to the interactive, three-dimensional widget by adapting the visual content displayed in the user interface display area based on the received interaction.
2. The method of item 1, wherein the interactive, three-dimensional widget is oriented such that a portion of the widget corresponding to the location or region represented by the visual content displayed in the user interface display area is visible.
3. The method of item 1 or item 2, comprising causing provision on the interactive, three-dimensional widget of a visual indicator configured to indicate on the widget the location or region represented by the visual content displayed in the user interface display area.
4. The method of item 3, comprising responding to receipt of an interaction with respect to the user interface display area by adjusting the visual indicator or the widget based on the interaction.
5. The method of item 3 or item 4, wherein the visual indicator comprises a polygon having a shape which delineates a portion of the surface of the three-dimensional widget which corresponds to the visual content displayed in the user interface display area.
6. The method of item 5, wherein the visual content displayed in the user interface display area is dependent on a virtual distance between a virtual camera and the three-dimensional body and wherein the shape of the polygon is calculated by:
   for each of the corner pixels of the visual content displayed in the user interface display area, determining a point of intersection between the corner pixel and a ray that extends from a center of projection of the virtual camera; and
   for at least one pixel on each of the edges of the visual content displayed in the user interface display area, determining a point of intersection between the edge pixel and a ray that extends from the center of projection of the virtual camera,
   wherein the shape of the polygon is defined by the determined points of intersection.
7. The method of item 3 or item 4, wherein the visual indicator is configured to indicate an orientation associated with the visual content displayed in the user interface display area relative to an orientation of the three-dimensional widget.
8. The method of item 3 or item 4, wherein the visual content displayed in the user interface display area is dependent on a virtual distance between a virtual camera and the three-dimensional body and wherein the method comprises:
   if the virtual distance is above a threshold, providing the indicator in a first form configured to delineate an area on the three-dimensional widget corresponding to the location or region represented by the visual content displayed in the user interface display area;
   if the virtual distance is below the threshold, providing the indicator in a second, different form configured to indicate a location on the widget corresponding to the location or region represented by the visual content displayed in the user interface display area.
9. The method of any preceding item comprising:
   responding to a determination that the visual content representing the location or region of the three-dimensional body no longer fills the entire user interface display area by causing the interactive, three-dimensional widget to disappear.
10. The method of item 9 comprising:
   subsequent to causing the interactive, three-dimensional widget to disappear, responding to a determination that the visual content representing the location or region of the three-dimensional body fills the entire user interface display area by causing the interactive, three-dimensional widget to re-appear.
11. The method of any preceding item , wherein the received interaction with respect to the interactive, three-dimensional widget comprises a navigation interaction and wherein adapting the visual content displayed in the user interface display area comprises causing display of visual content representing a new location or region on the three-dimensional body based on the navigation interaction.
12. The method of item 11, wherein adapting the visual content displayed in the user interface display area comprises causing display of an animation representing navigation from the visual content representing the original location or region to the visual content representing the new location or region.
13. The method of item 12, wherein the animation comprises zooming out from the visual content representing the original location or region until the entire body is visible in the user interface display area, rotating the three-dimensional body and zooming in to the visual content representing the new location or region.
14. The method of item 12 or item 13, comprising, during display of the animation, responding to receipt of an interaction in respect of the user interface display area by stopping the animation at a current view.
15. The method of any of items 11 to 14, comprising responding to receipt of the navigation interaction by causing rotation of the interactive three-dimensional widget such that a portion of the widget which corresponds to the new location or region is visible on the display.
16. The method of any of items 11 to 15, comprising:
   during receipt of the navigation interaction, causing display on the three-dimensional widget of a path from the original location or region to the new location or region.
17. The method of any preceding item, wherein the interactive, three-dimensional widget is rotatable about an axis of rotation, and wherein, when an interaction with respect to the three-dimensional widget is not currently being received, a relative orientation of the axis of rotation and the user interface display area is substantially constant.
18. The method of any preceding item , comprising responding to receipt of a selection interaction in respect of the interactive, three-dimensional widget by causing display of one or more user-selectable options.
19. A computer-implemented method of providing an interactive, geo-contextual interface, comprising:
   providing, by one or more computing devices, a user interface for display on a display device, the user interface including a display area for presenting visual content, the visual content representing an original location on a three-dimensional body;
   providing, by the one or more computing devices, an interactive widget for display on the display device, the widget being represented as three-dimensional and having an appearance corresponding to the three-dimensional body,
   the widget comprising a visual indicator configured to indicate on the widget the original location represented by the visual content displayed in the display area;
   receiving, by the one or more computing devices, data indicative of a user input directed to at least one of the user interface display area and the widget; and
   adjusting, by the one or more computing devices, at least one of the visual content, the widget, and the visual indicator based at least in part on the data indicative of the user input.
20. The computer-implemented method of item 19, wherein the widget is oriented such that a portion of the widget corresponding to the original location represented by the visual content displayed in the user interface display area is visible.
21. The computer-implemented method of item 19 or item 20, wherein the visual indicator comprises a polygon having a shape which delineates a portion of the widget which corresponds to the visual content displayed in the display area.
22. The computer-implemented method of any one of the preceding items ,
   wherein the visual indicator is configured to indicate an orientation associated with the visual content displayed in the display area relative to an orientation of the widget.
23. The computer-implemented method of any one of the preceding items ,
   wherein the visual content is displayed based at least in part on an adjustable zoom level relative to a surface of the three-dimensional body, and wherein the visual indicator is displayed in a first form when the zoom level is above a zoom threshold, and wherein the visual indicator is displayed in a second form when the zoom level is below the zoom threshold.
24. The computer-implemented method of any one of the preceding items ,
   wherein the visual content is displayed based at least in part on an adjustable zoom level relative to a surface of the three-dimensional body, and wherein the method further comprises:
   causing, by the one or more computing devices, the visual indicator to disappear when the zoom level is above a second zoom threshold.
25. The computer-implemented method of any one of the preceding items ,
   wherein the user input is directed to the user interface display area, and wherein adjusting, by the one or more computing devices, at least one of the visual content, the widget, and the visual indicator comprises:
   adjusting, by the one or more computing devices, the visual indicator based at least in part on the user input directed to the user interface display area.
26. The computer-implemented method of any one of the preceding items ,
   wherein the user input is directed to the user interface display area, wherein the user input is a navigation interaction directed to a new location, and wherein adjusting, by the one or more computing devices, at least one of the visual content, the widget, and the visual indicator comprises:
   adjusting, by the one or more computing devices, the widget such that a portion of the widget which corresponds to the new location is visible.
27. The computer-implemented method of any one of the preceding items , wherein the user input is directed to the widget, wherein the user input is a navigation interaction directed to a new location, and wherein adjusting, by the one or more computing devices, at least one of the visual content, the widget, and the visual indicator comprises:
   adjusting, by the one or more computing devices, the visual content presented in the display area such that it corresponds to the new location.
28. The computer-implemented method of item 27, wherein adjusting, by the one or more computing devices, the visual content presented in the display area such that it corresponds to the new location comprises:
   presenting, by the one or more computing devices, an animation associated with the visual content representing navigation from the original location to the new location.
29. The computer-implemented method of item 27 or item 28, further comprising:
   during receipt of the user input, presenting, by the one or more computing devices, for display on the widget, a second indicator extending from a portion of the widget corresponding to the original location to a portion of the widget corresponding to the new location.
30. The computer-implemented method of item 28 or item 29, further comprising:
   causing, by the one or more computing devices, the visual indicator to disappear during receipt of the user input.
31. The computer-implemented method of any one of the preceding items,
   wherein the widget is rotatable about an axis of rotation, and wherein, when an interaction with respect to the widget is not currently being received, a relative orientation of the axis of rotation and the display area is substantially constant.
32. A system for providing an interactive, geo-contextual interface, the system comprising:
   one or more processors; and
   one or more memory devices, the one or more memory devices storing instructions that when executed by the one or more processors cause the one or more processors to perform operations, the operations comprising:
      providing a user interface for display on a display device, the user interface including a display area for presenting visual content, the visual content representing an original location on a three-dimensional body;
      providing an interactive widget for display on the display device, the widget being represented as three-dimensional and having an appearance corresponding to the three-dimensional body, the widget comprising a visual indicator configured to provide geo-context associated with the visual content displayed in the display area;
      receiving data indicative of a user input directed to at least one of the display area and the widget; and
      adjusting at least one of the visual content, the widget, and the visual indicator based at least in part on the data indicative of the user input.
33. The system of item 32, wherein the visual indicator comprises a polygon having a shape which delineates a portion of the widget which corresponds to the visual content displayed in the display area, and wherein the polygon indicates the original location represented by the visual content displayed in the display area.
34. The system of item 32 or item 33 wherein the visual indicator comprises a shape configured to indicate an orientation associated with the visual content displayed in the display area relative to an orientation of the widget.
35. The system of any one of items 32 to 34, wherein the user input is directed to the widget, wherein the user input is a navigation interaction directed to a new location, and wherein adjusting at least one of the visual content, the widget, and the visual indicator comprises:
   adjusting the visual content presented in the display area such that it corresponds to the new location.
36. The system of item 35, wherein adjusting the visual content presented in the display area such that it corresponds to the new location comprises:
   presenting, by the one or more computing devices, an animation associated with the visual content representing navigation from the visual content representing the original location to the visual content representing the new location.
37. A user device, comprising:
   a display device;
   one or more processors; and
   one or more memory devices, the one or more memory devices storing instructions that when executed by the one or more processors cause the one or more processors to perform operations, the operations comprising:
      presenting a user interface for display on the display device, the user interface including a display area for presenting visual content, the visual content representing an original location on a three-dimensional body;
      presenting an interactive widget for display on the display device, the widget being represented as three-dimensional and having an appearance corresponding to the three-dimensional body, the widget comprising an adjustable visual indicator configured to provide geo-context associated with the visual content displayed in the display area;
      receiving data indicative of a user input directed to at least one of the display area and the widget; and
      adjusting at least one of the visual content, the widget, and the visual indicator based at least in part on the data indicative of the user input.
38. The user device of item 37, wherein when the user input is directed to the user interface display area, at least a visible portion of the widget adjusts such that it is consistent with the visual content presented in the display area, and wherein when the user input is directed to the widget, at least the visual content presented in the display area adjusts such that it is consistent with the visual portion of widget.

## Claims

1. A method for providing an interactive, geo-contextual interface, comprising:
causing display of a user interface display area in which is displayed visual content representing a region on a three-dimensional body;
causing display of an interactive, three-dimensional widget having a shape corresponding to that of the three-dimensional body;
causing provision on the interactive, three-dimensional widget of a visual indicator comprising a polygon having a shape which delineates a portion of the surface of the three-dimensional widget which corresponds to the region on the three-dimensional body represented by the visual content displayed in the user interface display area to provide geo-contextual information about the visual content displayed in the user interface display area;
responding to receipt of a first interaction with respect to the interactive, three-dimensional widget by adapting the visual content displayed in the user interface display area based on the received first interaction; and
responding to receipt of a second interaction for zooming in to or out from the visual content by adapting the visual content displayed in the user interface display area and adjusting a size of the polygon, based on the received second interaction, so as to indicate via the polygon the region represented by the visual content displayed in the user interface display area after receipt of the second interaction and thereby facilitate navigation around the three-dimensional body.

2. The method of claim 1, wherein the interactive, three-dimensional widget is oriented such that a portion of the three-dimensional widget corresponding to the location or region represented by the visual content displayed in the user interface display area is visible.

3. The method of claim 1 or claim 2, wherein the interactive, three-dimensional widget of a visual indicator is configured to indicate on the three-dimensional widget the region represented by the visual content displayed in the user interface display area, optionally wherein the method further comprises:
responding to receipt of an interaction with respect to the user interface display area by adjusting the visual indicator or the three-dimensional widget based on the interaction.

4. The method of any previous claim, wherein the visual content displayed in the user interface display area is dependent on a virtual distance between a virtual camera and the three-dimensional body and wherein the shape of the polygon is calculated by:
for each of the corner pixels of the visual content displayed in the user interface display area, determining a point of intersection between the corner pixel and a ray that extends from a center of projection of the virtual camera; and
for at least one pixel on each of the edges of the visual content displayed in the user interface display area, determining a point of intersection between the edge pixel and a ray that extends from the center of projection of the virtual camera,
wherein the shape of the polygon is defined by the determined points of intersection.

5. The method of claim 3, wherein the visual indicator is configured to indicate an orientation associated with the visual content displayed in the user interface display area relative to an orientation of the three-dimensional widget.

6. The method of claim 3, wherein the visual content displayed in the user interface display area is dependent on a virtual distance between a virtual camera and the three-dimensional body and wherein the method comprises:
if the virtual distance is above a threshold, providing the visual indicator in a first form configured to delineate an area on the three-dimensional widget corresponding to the location or region represented by the visual content displayed in the user interface display area;
if the virtual distance is below the threshold, providing the visual indicator in a second, different form configured to indicate a location on the three-dimensional widget corresponding to the location or region represented by the visual content displayed in the user interface display area.

7. The method of any preceding claim, comprising:
responding to a determination that the visual content representing the location or region of the three-dimensional body no longer fills the entire user interface display area by causing the interactive, three-dimensional widget to disappear.

8. The method of claim 7 comprising:
subsequent to causing the interactive, three-dimensional widget to disappear, responding to a determination that the visual content representing the location or region of the three-dimensional body fills the entire user interface display area by causing the interactive, three-dimensional widget to re-appear.

9. The method of any preceding claim, wherein the received interaction with respect to the interactive, three-dimensional widget comprises a navigation interaction and wherein adapting the visual content displayed in the user interface display area comprises causing display of visual content representing a new location or region on the three-dimensional body based on the navigation interaction.

10. The method of claim 9, wherein adapting the visual content displayed in the user interface display area comprises causing display of an animation representing navigation from the visual content representing the original location or region to the visual content representing the new location or region,
optionally wherein the animation comprises zooming out from the visual content representing the original location or region until the entire body is visible in the user interface display area, rotating the three-dimensional body and zooming in to the visual content representing the new location or region.

11. The method of claim 10, comprising, during display of the animation, responding to receipt of an interaction in respect of the user interface display area by stopping the animation at a current view.

12. The method of any of claims 9 to 11, comprising responding to receipt of the navigation interaction by causing rotation of the interactive three-dimensional widget such that a portion of the three-dimensional widget which corresponds to the new location or region is visible on the display.

13. The method of any of claims 9 to 12, comprising:
during receipt of the navigation interaction, causing display on the three-dimensional widget of a path from the original location or region to the new location or region.

14. The method of any preceding claim, wherein the interactive, three-dimensional widget is rotatable about an axis of rotation, and wherein, when an interaction with respect to the three-dimensional widget is not currently being received, a relative orientation of the axis of rotation and the user interface display area is substantially constant.

15. The method of any preceding claim, comprising responding to receipt of a selection interaction in respect of the interactive, three-dimensional widget by causing display of one or more user-selectable options.
